# EUROPÄISCHE PATENTANMELDUNG

(11) **EP 0 931 968 A1**
(43) Veröffentlichungstag der Anmeldung: **28.07.1999**
(21) Anmeldenummer: 99100214.8
(22) Anmeldetag: 08.01.1999
(51) Int. Cl.: F16L 33/207

(54) **Schlauchanschlussarmatur**

(30) Priorität: 21.01.1998 DE 19802039
(71) Anmelder: ITT MANUFACTURING ENTERPRISES, INC., Wilmington, Delaware 19801 (US)
(72) Erfinder: Sausner, Andreas, 60529 Frankfurt (DE)
(74) Vertreter: Dreiss, Fuhlendorf, Steimle & Becker, Patentanwälte

(57) **Zusammenfassung**

Die Erfindung betrifft eine Schlauchanschlußarmatur (1), insbesondere für Kraftfahrzeug-Bremsanlagen zum druckfesten Verbinden eines mehrschichtigen Schlauches (2) mit einem metallischen Endstück (3). Das Endstück (3) greift zumindest teilweise mit einem freien Ende (10) in den Schlauch (2) ein und besitzt wenigstens einen Wulst (11), wobei eine metallische Preßhülse (12) den Schlauch (2) umgreift, den Wulst (11) übergreift sowie seitlich zu dem Wulst (11) jeweils erste Preßabschnitte (13,14) aufweist. Der Kern der Erfindung liegt darin begründet, daß dem Schlauch (2) und dem Endstück (3) elastische sowie elektrisch isolierende Oberflächenschichten (7,8) zugeordnet sind, auf denen jeweils ein zweiter Preßabschnitt (15,16) flüssigkeitsdicht anliegt. Mit der Erfindung ist der Vorteil verbunden, daß die Schlauchanschlußarmatur gegenüber von außen eindringendem Elektrolyt abgedichtet ist, und daß ferner eine Lokalelementbildung und infolge dessen Korrosion der Schlaucharmatur vorgebeugt wird.

## Beschreibung

Die Erfindung betrifft eine Schlauchanschlußarmatur, insbesondere für Kraftfahrzeug-Bremsanlagen zum druckfesten verbinden eines mehrschichtigen Schlauches mit einem metallischen Endstück, Rohr oder dergleichen, welches zumindest teilweise mit einem Ende in den Schlauch eingreift und wenigstens einen Wulst aufweist; mit einer metallischen Preßhülse, welche den Schlauch umgreift, so daß die Preßhülse den Wulst übergreift sowie seitlich zu dem Wulst jeweils erste Preßabschnitte aufweist.

Gemäß einem internen Stand der Technik bei der Anmelderin ist das Endstück mit einem zweiten Wulst versehen, welcher im Rahmen der Herstellung und des Verpressens der Schlauchanschlußarmatur als Anschlag für ein Ende der Preßhülse dient. Folglich ist das Ende der Preßhülse an diesen zweiten Wulst anlegbar. Dadurch ist die Preßhülse zwar eindeutig positionierbar, aber durch die vorhandenen Spalte können von außen Flüssigkeiten und mithin Elektrolyte in den Zwischenraum zwischen Preßhülse und Endstück eindringen und sogar dazu führen, daß eine Passivierungsschicht des Endstücks infolge Lokalelementbildung aufgelöst wird. Es ist dabei zu Berücksichtigen, daß die Preßhülse üblicherweise aus einem Chrom-Nickelstahl besteht während das Endstück aus mit einer Passivierungsschicht versehenem metallischen Werkstoff wie beispielsweise Stahl oder Eisen aufgebaut ist. Dadurch besteht die Gefahr, daß der Passivschichtwerkstoff in Lösung geht. Korrosion der Schlauchanschlußarmatur bei von außen angreifendem Elektrolyt welcher beispielsweise schon in der Umgebungsluft enthalten sein kann, lässt sich daher nicht ausschließen.

Aufgabe der vorliegenden Erfindung ist es, eine eine kostengünstige, druckfeste Schlauchanschlußarmatur bereitzustellen, welche gegen Korrosionsangriff, insbesondere infolge von außen hinzutretendem Elektrolyt resistent ist und darüber hinaus auch bei Komplexbeanspruchung infolge Druckpulsation sowie äußerer mechanischer Beanspruchung langfristig hochdruckfest ist. Darüber hinaus soll ein einfaches Herstellungsverfahren angegeben werden.

Diese Aufgabe wird mit den Merkmalen des Patentanspruches 1 dadurch gelöst, daß dem Schlauch und dem Endstück elastische sowie elektrisch nichtleitende Oberfächenschichten zugeordnet sind, auf denen jeweils ein zweiter Preßabschnitt flüssigkeitsdicht anliegt. Die elastischen Oberflächenschichten führen gewissermaßen zu einer Abdichtung der Schlauchanschlußarmatur in dem gefährdeten Bereich. Ferner ist quasi eine elektrische Isolierung vorgesehen, so daß eine Lokalelementbildung ausgeschlossen ist.

Ferner wurde überraschenderweise gefunden, daß bei einer derartigen Schlauchanschlußarmatur mit ersten und zweiten Preßabschnitten schon ein einziger Wulst an dem Endstück ausreicht, um eine dauerhafte und druckfeste Verbindung bereitzustellen.

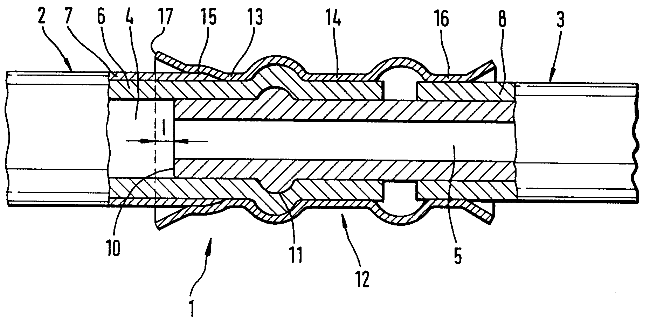

Weitere Ausgestaltungen der Erfindung gehen aus Unteransprüchen im Zusammenhang mit der Beschreibung und der Zeichnung hervor. Die Erfindung wird nachstehend anhand des Ausführungsbeispieles gemäß der Fig. im einzelnen erläutert. Eine Schlauchanschlußarmatur 1 dient zur druckfesten Verbindung eines mehrschichtigen Schlauches 2 mit einem Endstück 3, einem Rohr oder ähnlichem, so daß ein Druckmittel durch das Schlauchinnere 4 und das Rohrinnere 5 gefördert werden kann. Der Schlauch 2 verfügt über eine radial innere Schicht 6 mit wenigstens einer Verstärkungseinlage, insbesondere einem Geflecht au*s PTFE* (*Polytetrafluoräthylen*) sowie zusätzlich oder alternativ einem Geflecht aus *Chrom-Nickelstahl*. Radial außen ist eine Oberflächenschicht 7 aus einem Kunststoff vorgesehen.

Wie die Figur zeigt, greift das Endstück 3 mit seinem freien Ende 10 in das Schlauchinnere 4 ein und weist einen Wulst 11 auf, welcher im Zusammenhang mit einer Preßhülse 12 der mechanischen Befestigung dient. Die Preßhülse 12 übergreift den Wulstbereich und umgreift den Schlauch 2, wobei seitlich zu dem Wulst 11 jeweils ein erster Preßabschnitt 13,14 unmittelbar an der Außenseite der radial inneren Schicht 6 des Schlauchs 2 anliegt. Die Oberflächenschicht 7 ist also im Bereich der ersten Preßabschnitte 13,14 entfernt. Jeweils axial nach außen versetzt weist die Preßhülse 12 ferner noch zweite Preßabschnitte 15,16 auf und der erste Preßabschnitt 15 liegt federnd an der elastischen sowie elektrisch nicht leitenden Oberflächenschicht 7 des Schlauchs 2 an. An dem schlauchseitig axial äußeren Ende 17 der Preßhülse 12 erstreckt sich ein Mantelabschnitt quasi winklig zu einer sich durch Schlauch 2 und Endstück 3 erstreckenden, gedachten Achse.

Endstückseitig liegt der zweite Preßabschnitt 16 an einer elastischen sowie elektrisch nicht leitenden Oberflächenschicht 8 des Endstücks 3 an und auch das Mantelstück am Ende dieser Preßhülse 12 kragt im Winkel zu der gedachten Achse aus.

Hinsichtlich Werkstoff- und Schichtdicken kommen insbesondere folgende Kombinationen in Betracht. Vorzugsweise besteht die Oberflächenschicht 8 des Endstücks 3 aus Polyamid und besitzt eine Schichtdicke zwischen 25 bis 250 µm. Bei einer anderen vorteilhaften Ausführungsform der Erfindung besteht die Oberflächenschicht 8 des Endstücks 3 aus Polyvinylfluorid oder Polydivinylfluorid und es hat sich erwiesen, daß Schichtdicken von 5 bis 150 µm die gestellten Anforderungen erfüllen und die in Rede stehenden Probleme lösen.

Erfindungsgemäß ist die Schlauchanschlußarmatur in Hinblick auf von außen nach innen eindringende Elektrolyte abgedichtet und gewährleistet aufgrund dessen erhöhten Widerstand gegen Korrosion und verbesserte Dauerfestigkeit. Ferner ist die Schlauchanschlußarmatur geeignet, den Herstellungsaufwand und dadurch die Herstellungskosten zu senken, weil bereits ein einziger Wulst 11 ausreicht, um Hochdruckfestigkeit zu gewährleisten. Es ist insbesondere kein Wulst notwendig, um die Preßhülse 12 in Relation zu dem Endstück 3 zu positionieren bzw. anzulegen. Im Rahmen der Herstellung der erfindungsgemäßen Schlauchanschlußarmatur wird das in den Schlauch 2 eingeschobene Endstück 3 zusammen mit der Preßhülse 12 derart in ein Werkzeug eingelegt, daß ein werkzeugfester Anschlag für eine korrekte Positionierung der Preßhülse 12 relativ zu Endstück 3 und Schlauch 2 sorgt. Es liegt folglich auch ein vorteilhaftes Verfahren zur Herstellung einer Schlauchanschlußarmatur 1 vor.

In diesem Zusammenhang ist darauf hinzuweisen, daß das schlauchseitige Ende 17 der Preßhülse 12 stets so auszurichten ist, daß es das freie Ende 10 des Endstückes 3 mit einer Länge 1 axial übergreift. Dies führt zu einer erhöhten Unempfindlichkeit der Schlauchanschlußarmatur gegenüber Knicken und Biegung. Darüber hinaus werden durch Druckpulsationen hervorgerufene temporäre Aufweitungen des Schlauchs 2 durch den Winkel abstehenden Bereich der Preßhülse 12 aufgefangen, ohne daß es zu Beschädigungen des elastischen Schlauchmaterials kommt.

Es ist darauf hinzuweisen, daß vielfältige vorteilhafte Abwandlungen der Erfindung denkbar sind, ohne den Erfindungsgedanken zu verlassen.

## Patentansprüche

1. Schlauchanschlußarmatur, insbesondere für Kraftfahrzeug-Bremsanlagen zum druckfesten Verbinden eines mehrschichtigen Schlauchs (2) mit einem metallischen Endstück (3) oder dergleichen, welches zumindest teilweise mit einem freien Ende (10) in den Schlauch (2) eingreift und wenigstens einen Wulst (11) aufweist; mit einer metallischen Preßhülse (12), welche den Schlauch (2) umgreift, so daß die Preßhülse (12) den Wulst (11) übergreift sowie seitlich zu dem Wulst (11) jeweils erste Preßabschnitte (13,14) aufweist, welche auf dem Schlauch (2) aufliegen, und wobei dem Schlauch (2) und dem Endstück (3) elastische sowie elektrisch nicht leitende Oberflächenschichten (7,8) zugeordnet sind, auf denen jeweils ein zweiter Preßabschnitt (15,16) flüssigkeitsdicht anliegt.

2. Schlauchanschlußarmatur nach Anspruch 1, dadurch **gekennzeichnet**, daß das Endstück (3) eine Oberflächenschicht (8) aus Polyamid aufweist.

3. Schlauchanschlußarmatur nach Anspruch 2, dadurch **gekennzeichnet**, daß die Oberflächenschicht (8) eine Dicke von 25 bis 250 µm aufweist.

4. Schlauchanschlußarmatur nach Anspruch 1, dadurch **gekennzeichnet**, daß die Oberflächenschicht (8) aus Polyvinylfluorid oder Polydivinylfluorid besteht.

5. Schlauchanschlußarmatur nach Anspruch 4, dadurch **gekennzeichnet**, daß die Oberflächenschicht (8) eine Dicke von 5 bis 150 µm aufweist.

6. Schlauchanschlußarmatur nach Anspruch 5, dadurch **gekennzeichnet**, daß der Schlauch (2) eine radial innere Schicht (6) mit wenigstens einer Verstärkungseinlage und eine radial äußere Oberflächenschicht (7) aufweist.

7. Schlauchanschlußarmatur nach Anspruch 6, dadurch **gekennzeichnet**, daß die Oberflächenschicht (7) nicht im Bereich der ersten Preßabschnitte (13,14) vorgesehen ist.

8. Verfahren zum Herstellen einer Schlauchanschlußarmatur, insbesondere nach Anspruch 1, dadurch **gekennzeichnet**, daß ein Endstück (3) in einen Schlauch (2) eingeschoben wird, sodann eine Preßhülse (12) über den Eingriffsbereich geschoben wird, und sodann die Preßhülse (12) mit Hilfe eines in einem Werkzeug vorgesehenen Anschlag relativ zu dem Schlauch (2) und dem Endstück (3) positioniert und sodann mit Hilfe von umfangsseitig hervorgerufenen Preßvorgängen, welche Preßabschnitte (13,14,15,16) hervorrufen, unlösbar befestigt wird.
